# EUROPEAN PATENT APPLICATION

(11) **EP 3 241 606 A1**
(43) Date of publication of application: **08.11.2017**
(21) Application number: 17167123.3
(22) Date of filing: 19.04.2017
(51) Int. Cl.: B01F 7/24, B01F 13/10, B01F 15/02, B01F 15/00, A01K 5/00, B01F 7/00

(54) **MIXING DEVICE**

(30) Priority: 26.04.2016 NL 2016683
(71) Applicant: Liet, Cornelis Hendricus, 7581 TJ Losser (NL)
(72) Inventor: Liet, Cornelis Hendricus, 7581 PJ Losser (NL)
(74) Representative: Zonneveld, Hendrik Jan

(57) **Abstract**

Mixing apparatus (1, 51) provided with a bin (3) with a bottom and at least three augers (14, 15; 52) mounted in the bin. The augers are arranged in a triangular, square or rectangular configuration. Three or four augers can for instance enclose an insert (54) with an outside surface sloping downwards in the direction of the lower edges of the respective augers.

## Description

The invention relates to a mixing apparatus, more particularly for feed. The mixing apparatus is provided with a bin with a bottom and at least one auger mounted in the bin, which [auger] is provided with a rotatingly driven rotor body with at least one mixing ribbon spiralling across the outside of the rotor body.

Such mixers are known for instance from DE-U-20305983 and EP 0 943 236 A1. The augers are driven to rotate around a vertical axis. The feed that is present in the mixer is lifted up by the rotating mixing ribbon and mixed. Because of the limited battery capacity it is important in said process that the driving gear of the augers requires as little power as possible, especially when the mixer is part of a self-propelled automatic feeding system or feed robot which has to cover longer distances.

The invention has for its object to provide an energy-efficient mixer.

The object of the invention is attained with a mixing apparatus provided with a bin with a bottom and at least one auger mounted in the bin provided with a rotatingly driven rotor body with at least one mixing ribbon spiralling across the outside of the rotor body, with the mixing ribbon in radial cross-section being at an angle to the horizontal.

Because of the inclined position of the mixing ribbon the feed to be mixed - or other bulk material - is not only pushed upwards but also dispersed sideways. As a result of this the pressure on the mixing ribbon is greatly reduced, so that the auger can be driven with more limited power. The feed is compressed less and remains looser. The dosing of the feed likewise proceeds more gradually.

In radial cross-section of the auger the mixing ribbon in an exemplary embodiment moves in an inclined downward direction from the rotor body, with the outermost edge of the mixing ribbon pointing downwards. The angle between the mixing ribbon and the horizontal can for instance increase gradually, or stepwise if so desired, from a bottom side of the mixing ribbon. Good results are obtained in particular when on the upper side of the mixing ribbon the angle to the horizontal is 20 - 50 degrees. On the underside the mixing ribbon is for instance about parallel to the bottom.

The pitch of the mixing ribbon is for instance between 15 - 35 degrees.

The invention also relates to a mixing apparatus, more particularly for feed, which is provided with a bin with a bottom and at least one auger mounted in the bin with a rotatingly driven rotor body and with at least one mixing ribbon spiralling across the outside of the rotor body. The mixing apparatus in that case is provided beneath the bin with a rotatable, optionally driven disc which is essentially parallel to the bottom of the bin. The disc is mounted for instance beneath an outlet opening of the bin or beneath a guide plate beneath the outlet opening of the bin, such that the material originating from the outlet opening moves away from the mixing apparatus, for instance in the direction of a feed alley in a barn. The disc is situated for instance at a height of at most 4 cm from a floor on which the mixing apparatus is mounted. As an alternative for the rotating disc or in addition thereto, the mixing apparatus can be provided with at least one blower nozzle, for instance a blower nozzle directed sideways, on the underside of the bin, so that any material left behind can be moved away from the mixing apparatus. Preferably, the apparatus comprises a control unit for stopping and lifting the disc and/or the blower nozzle, so that when the apparatus is moved, any obstacles can be avoided.

The mixer bin has a vertical wall, which usually is slightly inclined, with the upper circumference exceeding the lower circumference. The lower circumference of the wall generally encloses the radius of the augers, with clearance. If the mixer contains two augers, the circumference of the wall will be substantially oval in shape. If four augers are used, the wall can for instance be substantially square in shape. If six or more augers are used, the mixing apparatus is particularly suitable for processing two bales simultaneously. The augers in that case can be arranged for instance in two rows, so that the mixing bin will have a rectangular circumference in top view.

The spaces between the augers can be filled with tapered inserts. Such inserts generally comprise an outside surface which slopes downwards gradually from a central peak to a bottom edge which bounds the radius of an adjacent auger.

On the underside the mixing ribbon can for instance be provided with a lower edge which extends in essentially radial direction vis-à-vis the axis of rotation. The lower edge of the mixing ribbon generally is positioned essentially horizontally at a fixed height above the bottom of the bin. The lower edge height sweeps across the bottom in order to set as much of the feed as possible in motion and scoop it up. The height of the lower edge vis-à-vis the bottom of the bin is for instance at most 2 cm, for instance at most 1 cm, for instance at most about 0.5 cm.

The axis of rotation of the auger can for instance be essentially vertical and extend in a direction which is essentially perpendicular to the bottom of the bin. In another embodiment the axis of rotation can be at an angle of for instance at most 10 degrees to the vertical.

The rotor body usually forms a vertical cylindrical, for instance tapering, for instance conical core of the auger.

In radial direction the mixing blade for instance has an essentially uniform width. The radial width of the mixing ribbon is for instance at least 15 cm, for instance at most 35 cm.

The mixing ribbon is wound around the rotor body by at least one turn, for instance by two turns. If so desired, the mixing ribbon may be wound around the rotor body by several turns.

The mixing ribbon can for instance be provided with rotating knives and/or discs. Alternatively, the mixing ribbon [can] be provided with fixed knives protruding vis-à-vis the circumference of the mixing ribbon in order to cut the feed during mixing.

The invention further relates to a mixing apparatus provided with a bin with a bottom an at least one auger mounted in the bin, which auger is provided with a rotatingly driven rotor body with at least one mixing ribbon spiralling across the outside of the rotor body The auger in that case can be provided on the upper side with a cutting device, such as a circular knife or a circular saw, which vis-à-vis the auger is rotatable around the longitudinal axis of the auger. When the mixing apparatus is loaded, for instance with bales or loose feed, the feed is first chopped up by the cutting devices in order to next be mixed more thoroughly by the rotor bodies of the augers.

The cutting device can for instance be driven by means of a separate driving gear which operates independently from the auger's driving gear. The auger and the cutting device can for instance have separate coaxial drive shafts, with the drive shaft for the auger being tubular and with the drive shaft for the cutting device protruding both on the underside and on the upper side beyond the drive shaft of the auger. On the upper side the drive shaft supports the cutting device, while on the underside it is connected to a driving gear. The circular knife - or the circular saw - is for instance essentially parallel to the bottom of the bin. Furthermore, the circular knife - or the circular saw - can be provided on the upper side with a distribution body with an outside surface which runs downwards from a peak in the direction of the cutting edges of the circular knife or the circular saw. To support the circular saw a supporting plate can be mounted beneath the circular saw. This can be of use in particular when processing bales.

A suitable circular saw can for instance be provided with relatively short cutting teeth in order to reduce the risk of separated feed jamming the teeth. The cutting teeth can for instance protrude 8 mm or less, for instance 4 mm or less, vis-à-vis the teeth's inner diameter. Good results are for instance obtained with teeth of 3 - 4 mm in length. The length of the cutting teeth can for instance be adjustable or fixed. The cutting edge of the circular saw can for instance have a serrated profile in top view. If so desired, the serrations may be curved or be in the plane of the saw blade.

The tip of the cutting tooth cuts and pulls on the crop to be separated. By keeping the cutting teeth short the overall tensile force is restricted, so that the circular saw will no longer jam quickly. Preferably, the length of the cutting teeth is such that at optimal rotational speed of the saw for a particular type of feed, the net tensile force of the joint meshed teeth is such that the feed to be processed is pulled towards the saw without the saw becoming stuck in the feed. The optimal rotational speed varies per type of feed. Thus dry hay or straw calls for a lower rotational speed, while a higher speed can be used for instance for maize.

Particularly good results are obtained if the cutting teeth protrude vis-à-vis the circular circumference of the saw blade which, at least in the vicinity of the cutting teeth or in its entirety, is continuously circular, i.e. without a serrated pattern between the teeth as is customary with regular circular saw blades.

Preferably, the circular saw has a relatively large number of teeth, for instance at least 40 teeth, as a result of which the auger is able to rotate less quickly and still give sufficient cutting power.

The mixing apparatus can for instance be provided with at least three, for instance three or four augers which in top view are arranged in a triangle and in a rectangle, such as a square, respectively, for instance around a smaller auger. As a result of this relatively small augers can be used with a larger mixing bin, so that the device can be constructed more cheaply. It was found that the conveying power of three or more smaller augers exceeds that of one large auger. As a result of this the augers can be driven more slowly, thus enabling energy savings.

In a square set-up the augers which are positioned diagonally opposite to one another can for instance be driven in the same direction, while the remaining two augers are driven in the opposite direction. A pair of augers which are positioned diagonally opposite to one another can for instance be driven from a central axis. The other two augers in that case can be driven from the same central axis, but in reverse direction, for instance by means of two chain wheels. If a smaller auger is mounted midway between the augers, it will slow down the lowering of a bale introduced into the mixing bin.

Good results are obtained if the cutting devices on the upper side of the augers are at mutually different heights vis-à-vis the bottom of the bin, for instance because the augers have different heights.

The mixing apparatus can be configured as a wheeled cart, for instance a trailer, or it can be part of a self-propelled automatic feeder, such as a feed robot.

The invention will be elucidated further with reference to the drawings. Herein:
- Figure 1:: is a representation in side view of a mixing apparatus according to the invention;
- Figure 2:: is a representation of the augers of the mixing apparatus of Figure 1;
- Figure 3:: is a cross-sectional representation of one of the augers of Figure 2;
- Figure 4:: is a representation in side view of a robot type of mixing apparatus;
- Figure 5:: is a representation in top view of the mixing apparatus of Figure 4;
- Figure 6:: is a representation in top view of a further alternative embodiment of a mixing apparatus
- Figure 7:: is a representation in top view of a central insert of the mixing apparatus of Figure 6;
- Figure 8:: is a cross-sectional representation of the insert of Figure 7 along the line VIII - VIII;
- Figure 9:: is a representation in top view of an alternative embodiment of a mixing apparatus;
- Figure 10:: is a cross-sectional representation of the mixing apparatus of Figure 9;
- Figure 11:: is a cross-sectional representation of an auger of the mixing apparatus of Figure 9
- Figure 12A:: is a schematic representation in top view of the driving gear for the augers of the apparatus of Figure 9;
- Figure 12B:: is a representation in side view of the driving gear of Figure 12A;
- Figure 12C:: is a representation in bottom view of the driving gear of Figure 12A.

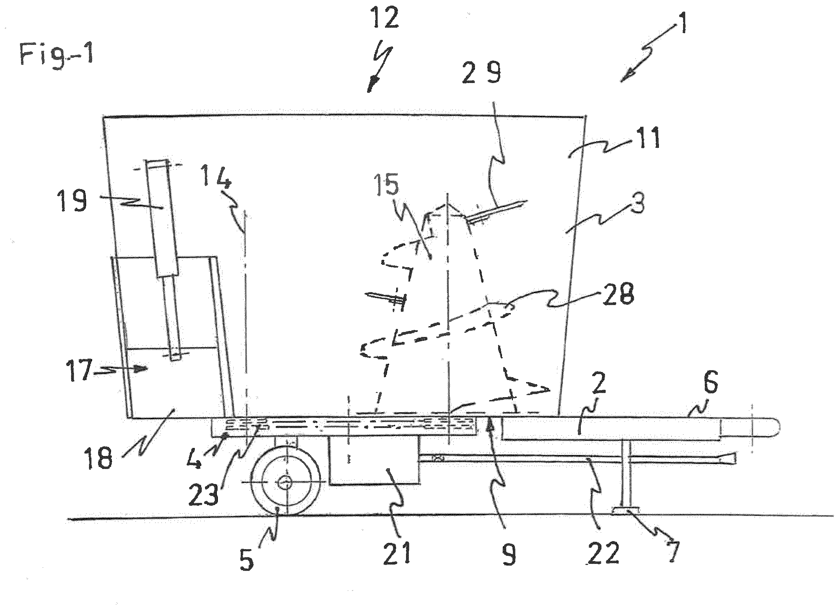

Figure 1 shows a mixing apparatus 1. The mixing apparatus in Figure 1 is configured as a trailer 2 with a bin 3 resting on a chassis 4 with wheels 5. The trailer 2 is further provided at the front with a drawbar 6 resting on a collapsible standard 7.

The bin 3 comprises a flat bottom 9, a circular, vertical wall 11 and an open upper side 12, where feed or other bulk material can be loaded into the bin 3. On the bottom 9 of the bin 3 two vertical augers 14, 15 are mounted, one of which is shown in the Figure by means of dotted lines, while the other is shown schematically by means of a vertical central axis. In side view the two augers 14, 15 are hidden from view by the circular vertical wall 11. The vertical wall 11 is at an angle in side view, for instance at an angle of about 5 degrees to the vertical, so that the circumference on the upper side exceeds the circumference on the underside, which runs around the lowest circumference of the radius of the two 14, 15 with little clearance.

On the rear side the depicted side of the bin 3 is provided with an outlet opening 17 which can be closed by means of a slide 18 which can be moved by means of a hydraulic cylinder 19 between an upper open position and a lower, closing position, as is shown in Figure 1.

On the underside the mixing apparatus 1 comprises a driving gear 21 with a power take off 22 for coupling to the driving motor of a vehicle (not shown). The driving gear is coupled to the two augers 14, 15 by means of a transmission 23.

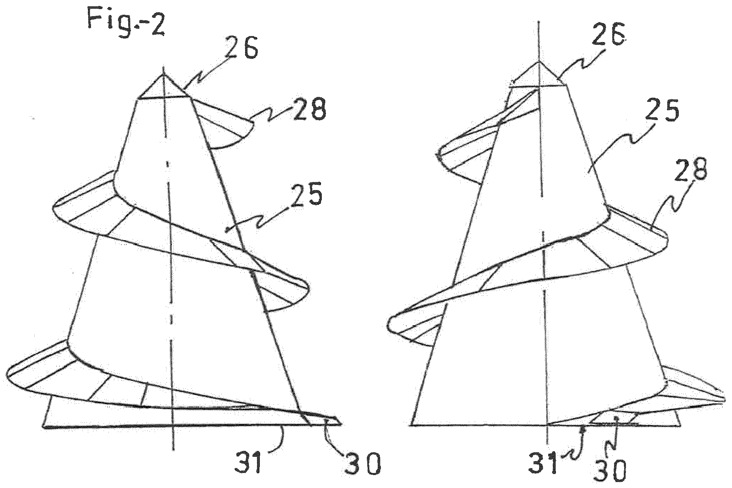

The two augers 14, 15 have the same dimensions and are one another's mirror image, as shown in Figure 2. The two augers rotate in opposite directions of rotation, with the lower edge of the mixing ribbon being turned forward. In an alternative embodiment use may be made of augers of different diameters and/or heights or mixing ribbon geometry.
The two augers 14, 15 have a conically shaped body of rotation 25 with a conicity of about 0.6. A top 26 of the body of rotor body is formed by a cone with an angle of inclination of about 45 degrees.

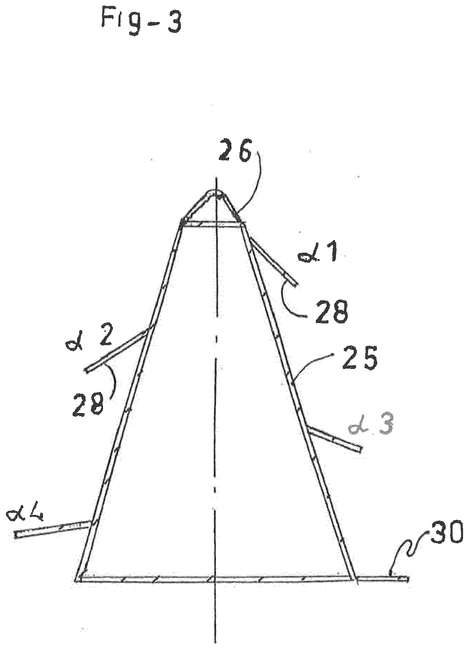

The two augers 14, 15 are provided with a mixing ribbon 28 which is wound spirally around the rotor body 25 in two turns. In radial cross-section the mixing ribbon 28 is at an angle to the horizontal, with the mixing ribbon 28 moving in an inclined downward direction from the rotor body 25 in radial cross-section. As shown in particular in Figure 3, the angle between the mixing ribbon 28 and the horizontal increases gradually from a somewhat curved underside 30 of the mixing ribbon 28. The lower edge 31 of the mixing ribbon 28 is virtualy horizontal and in use is situated about 0.5 cm above the bottom 9 of the bin 3. Immediately above the curved lower section 30 the mixing ribbon 28 lies at an angle α4 of about 18 degrees to the horizontal, while near the top 26 the mixing ribbon 28 lies at an angle α1 of about 30 degrees to the horizontal. As for the angles shown in the drawing, the following applies: α4 < α3 < α2 < α1. In the shown embodiment the angle increases gradually. In an alternative embodiment the angle can for instance increase stepwise once or several times.

As shown in Figure 1, the upper end of the mixing ribbon 28 has a knife 29 which is angled upwards attached to it (not shown in Figures 2 and 3). In other possible embodiments use may be made of a rotating serrated knife or saw which can for instance be driven additionally on the upper side of the auger.

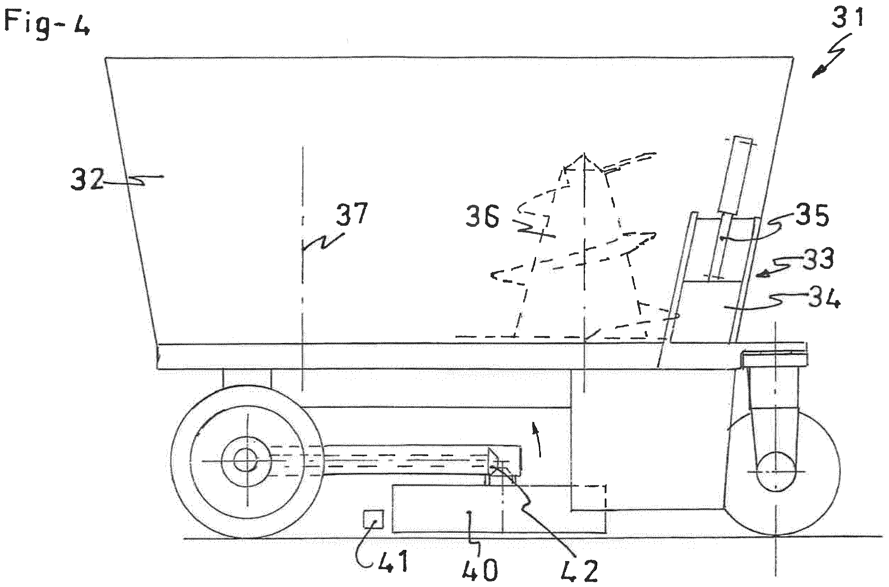

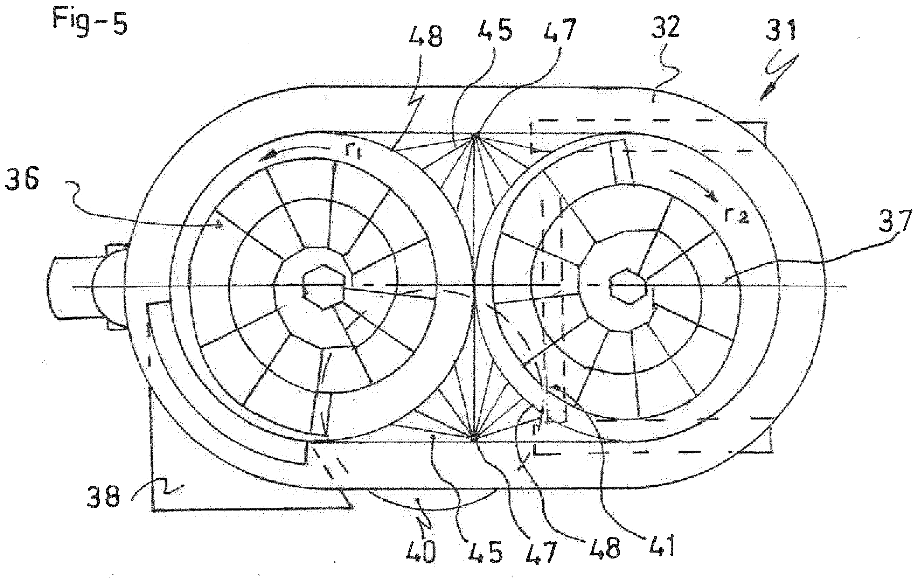

An alternative embodiment is shown in Figures 4 and 5. The mixing apparatus 31 depicted is a self-propelled automatic feed robot. In order to prevent skidding each wheel of the robot can be provided with a separate own driving gear. This mixing apparatus 31 likewise is provided with a wheeled bin 32 with an outlet opening 33 which can be closed with a slide 34 which by means of a hydraulic cylinder 35 or electric driving gear can be slid up and down between an open position and a closing position, as shown in Figure 4. In the bin 32 two augers 36, 37 are mounted which have the same geometry as the augers 14, 15 in the exemplary embodiment of Figures 1-3.

Figure 5 shows a top view of the mixing apparatus 31. The direction of rotation R1 of the auger 36 near the outlet opening 33 is such that feed is moved by the auger 36 in the direction of the outlet opening 33. Beneath the outlet opening 33 a guide plate 38 is mounted along which the feed slides down and lands on a barn floor at a distance from the mixing apparatus 31.

Beneath the bin 32 the mixing apparatus 31 is provided just behind the guide plate 38 with a rotatingly driven horizontal disc 40 which is suspended about 1 - 5 cm above the floor and which moves feed which lands too close to the mixing apparatus 31 away from the mixing apparatus still in the direction of a feed alley in a barn. The disc 40 is provided with a protective coating on the underside to prevent damage. In addition to the rotatable disc 40 a nozzle 41 is mounted which can blow any feed left behind in the direction of the feed alley. The rotating disc 40 is coupled by means of a right-angled transmission 42 to a wheel axle, so that the disc will always rotate while the mixing apparatus 31 is moved. Preferably, the speed at the circumference of the disc is essentially equal to the rate of displacement of the mixing apparatus. If so desired, other driving gears may alternatively be used for the disc 40.

In the area between the two augers 36, 37 inserts 45 are mounted on either side. The two inserts 45 have an inclined surface which moves in an inclined downward direction from a central peak 47 positioned against the inside wall of the bin to two quarter-circle bottom edges 48 arranged in mirror symmetry and becoming spherical towards the centre, which each bound a quarter of the radius of an auger 36, 37. Feed which ends up between the augers 36, 37 slides back to the augers 36, 37 via the inserts 45 for further mixing.

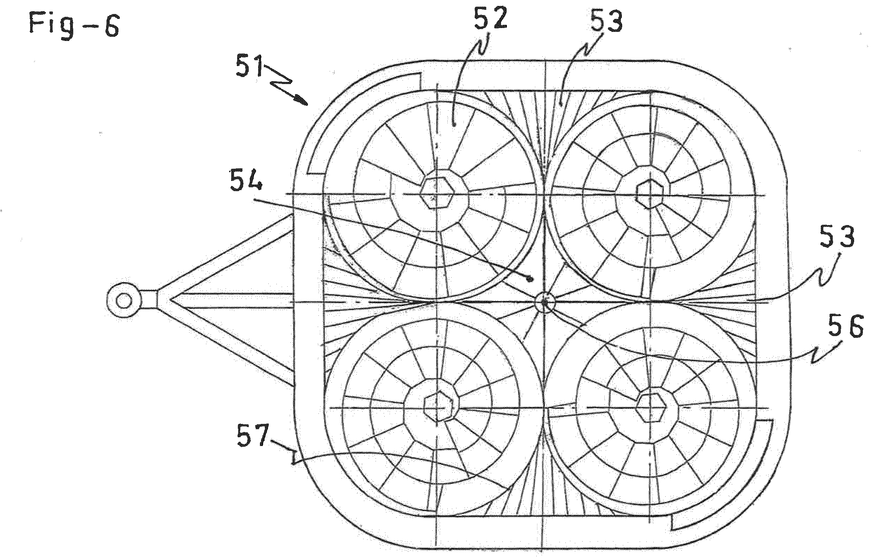

Yet another possible embodiment is shown in top view in Figure 6. This embodiment is made up of a mixing apparatus 51 with four augers 52 preferably rotating in opposite directions to one another of the same geometry as the augers 14, 15 of the embodiment of Figures 1 - 3. Apart from inserts 53 on the inside walls of the bin, the mixing apparatus 51 also includes a central insert 54 mounted in between the four augers 52. This central insert 54 has a surface that gradually moves in an inclined downward direction to four quarter-circle bottom edges 57 at a short distance from the lower radius of the adjacent auger 52.

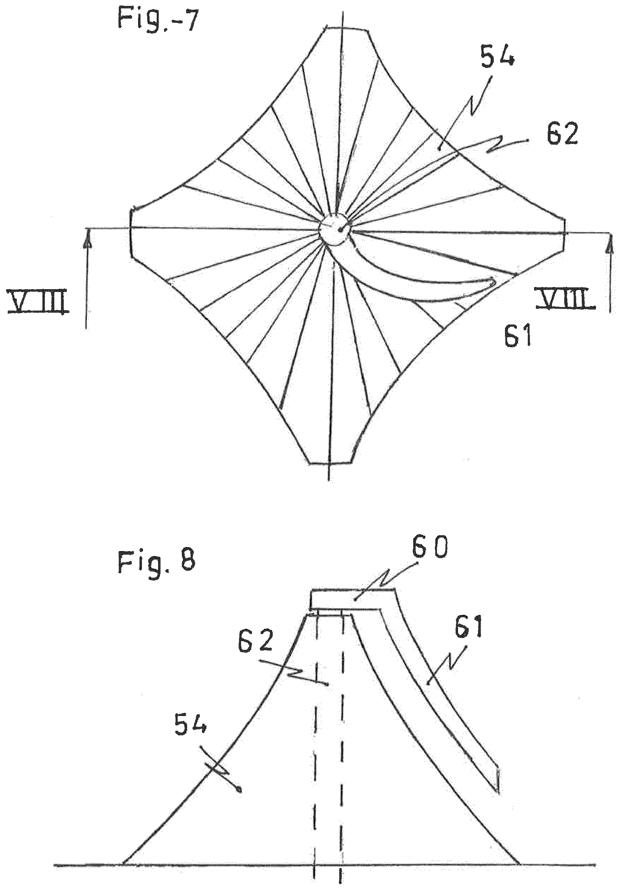

The central insert 54 is shown in greater detail in Figures 7 an 8. This insert 54 comprises a stirrer 60 with a blade 61 which is attached to a top end of a vertical shaft 62 which passes centrally through the insert 54. The blade 61 of the stirrer 60 can be rotatingly driven by means of the vertical shaft 62, in which process the outside surface of the insert 54 is wiped clean. The blade 61 of the stirrer 60 may be provided with a cutting edge if so desired.

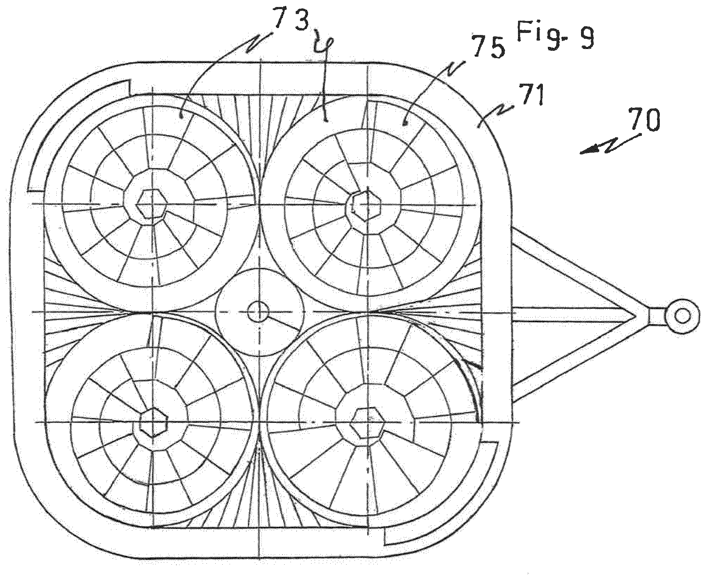

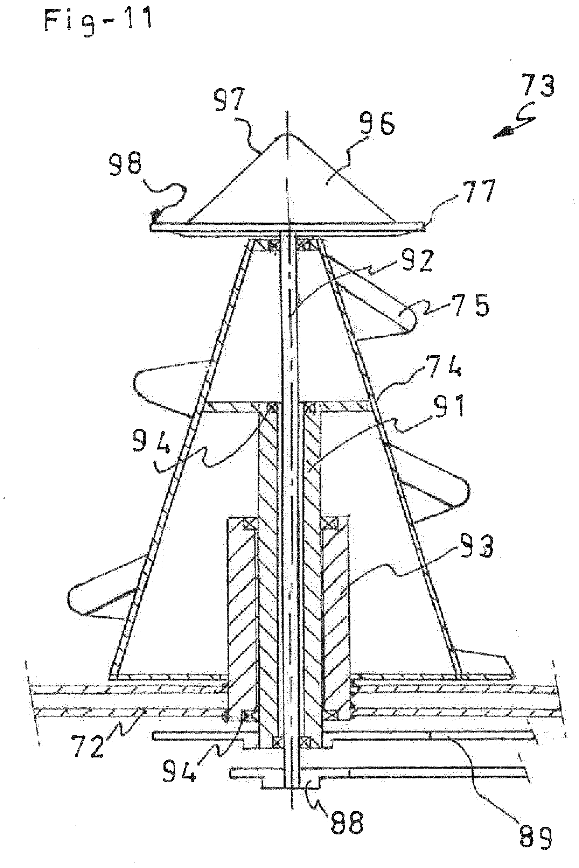

Figure 9 shows a mixing apparatus 70 provided with a bin 71 with a bottom 72 and four augers 73 mounted in the bin 71, which augers are shown in greater detail in Figure 11. The augers 73 are provided with a hollow, conical and rotatingly driven rotor body 74 with a mixing ribbon 75 spiralling across the outside of the rotor body. Both augers 73 are provided on the upper side with een circular saw 77, which is rotatable vis-à-vis the remainder of the auger 73 around the longitdinal axis L of the auger 73.

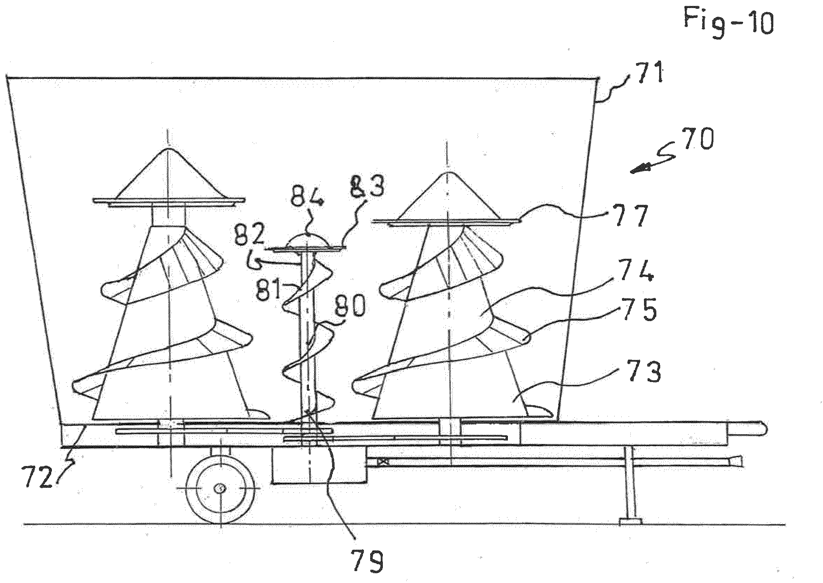

The augers 73 are arranged in a square and jointly enclose a central space in which a smaller vertical rotor 79 is mounted with a cylindrical, non-rotating tubular core 80 provided with a spiralling mixing ribbon 81 (see Figure 10). Passing through the tubular core 80 is a rotatingly driven vertical drive shaft 82, which supports a coaxial, essentially horizontal circular saw 83. On the upper side the circular saw 83 is provided with a coaxial semi-spherical divider body 84. When a bale is loaded into the mixing bin, this smaller auger 79 slows down the lowering of the bale.

Figure 11 shows the auger 73 in cross-section. The circular saw 77 is driven by means of a separate driving gear 88 which operates independently from a driving gear 89 of the rotor body 74 of the auger 73. The conical rotor body 74 of the auger 73 and the circular saw 77 have separate coaxial drive shafts 91, 92. The drive shaft 91 for the rotor body 74 is rotatably incorporated in a tubular bearing 93 passing through the bottom 72 of the bin 71 vertically. The drive shaft 91 comprises a tube in which the drive shaft 92 for the circular saw 77 is rotatably incorporated by means of bearings 94. The drive shaft 92 of the circular saw 77 protrudes on the underside as well as the upper side vis-à-vis the drive shaft 91 of the rotor body 74. On the upper side the drive shaft 92 supports the circular saw 77, while on the underside it is connected to the driving gear 88.

The circular saw 77 is essentially parallel to the bottom 72 of the bin 71. In the shown embodiment the circular saw 77 is further provided on the upper side with a conical distribution body 96 with an outside surface which moves in a downward direction from a peak 97 towards the cutting edges 98 of the circular saw 77. Other possible embodiments can be provided with a circular saw without the distribution body 96 or with a distribution body with a different sloping shape, for instance a semi-spherical shape.

At four points a triangular space is enclosed by the wall of the bin 71 and two augers 73 mounted side by side. In each of these spaces an insert 76 is mounted similar to the inserts 53 in the embodiment of Figure 6.

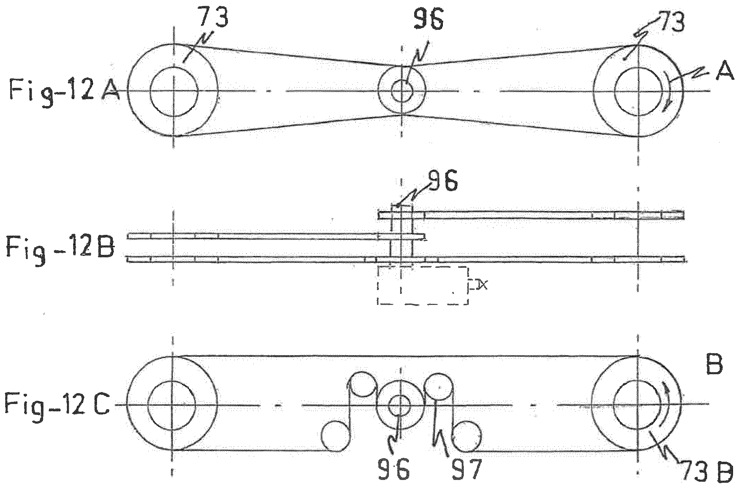

Figures 12A-C show the driving gear of the four augers 73 by means of a central axis 96. A first pair of augers 73A mounted diagonally opposite to one another is driven by means of the central axis 96 in the same direction of rotation A (Figure 12A). The other two augers 73B are driven by means of four chain wheels 97 in the opposite direction of rotation B (Figure 12C). The central axis 96 also drives the small central auger 79.

## Claims

1. Mixing apparatus (1, 31, 51) provided with a bin (3; 32) with a bottom and several augers (14, 15; 36, 37; 52) mounted in the bin, **characterised in that** the mixing apparatus comprises at least three augers (52), which are arranged in a triangular, square or rectangular configuration.

2. Mixing apparatus according to claim 1, wherein three or four augers enclose an insert (54) with an outside surface sloping downwards in the direction of the lower edges of the respective augers.

3. Mixing apparatus according to claim 2, wherein the insert (54) is provided with a stirrer (60) with a blade (61) which can be moved across at least an upper section of the insert.

4. Mixing apparatus according to claim 3, wherein the stirrer (60) has a vertical drive shaft (62) which passes centrally through the insert (54).

5. Mixing apparatus according to claim 3 or 4, wherein the stirrer blade (61) is provided with one or more cutting edges.

6. Mixing apparatus according to claim 1, wherein the augers are grouped around a smaller auger.

7. Mixing apparatus according to any one of preceding claims 1 - 6, wherein the cutting device of an auger is driven by another driving gear than the rotor body of the auger.

8. Mixing apparatus according to any one of preceding claims 1 - 7, wherein the cutting devices on the upper side of the augers have mutually different heights vis-à-vis the bottom of the bin.

9. Mixing apparatus according to any one of preceding claims 1 - 8, wherein the cutting device or circular saw is provided with a cutting edge which is serrated in top view, wherein the serrations may be curved or be in the plane of the saw.

10. Mixing apparatus according to any one of the preceding claims, **characterised in that** the auger is provided with a rotatingly driven rotor body with at least one mixing ribbon spiralling across the outside of the rotor body, wherein the mixing ribbon lies at an angle to the horizontal in radial cross-section, for instance such that the mixing ribbon (28) moves in an inclined downward direction from the rotor body in radial cross-section, with for instance the angle (α1, α2, α3, α4) between the mixing ribbon (28) and the horizontal increasing gradually from an underside of the mixing ribbon, for instance such that the angle (α1, α2, α3, α4) is at least 30 degrees, for instance at least 45 degrees, on the upper side of the mixing ribbon (28).

11. Mixing apparatus according to any one of the preceding claims, **characterised in that** the mixing apparatus (31) is provided beneath the bin (32) with a rotatingly driven disc (40) which is essentially parallel to the floor across which the mixing apparatus travels.

12. Mixing apparatus according to any one of the preceding claims, **characterised in that** the mixing apparatus (31) is provided on the underside of the bin (32) with at least one nozzle (41), for instance a nozzle directed sideways.

13. Mixing apparatus according to any one of the preceding claims, wherein the auger is provided on the upper side with a cutting device which vis-à-vis the auger is rotatable around the longitudinal axis of the auger, with the cutting device for instance being made up of a circular knife or circular saw which is essentially parallel with the bottom.

14. Mixing apparatus according to claim 13, provided with a supporting plate on the underside of the circular saw or of the circular knife.

15. Mixing apparatus according to claim 13 or 14, wherein the circular saw or knife is provided on the upper side with a conical distribution body with an outside surface which moves in a downward direction from a peak towards the cutting edges of the circular knife or the circular saw.
